# EUROPEAN PATENT APPLICATION

(11) **EP 1 183 977 A1**
(43) Date of publication of application: **06.03.2002**
(21) Application number: 01850147.8
(22) Date of filing: 28.08.2001
(51) Int. Cl.: A47K 7/02, A45D 44/00, A47L 13/18, B32B 5/26

(54) **Wipe with tunnel-shaped holding means**

(30) Priority: 04.09.2000 SE 0003113
(71) Applicant: SCA Hygiene Products AB, 405 03 Göteborg (SE)
(72) Inventor: Widlund, Urban, 435 43 Pixbo (SE)
(74) Representative: Romare, Laila Anette

(57) **Abstract**

The invention relates to a wipe (100), especially for cleaning the genital and anal region, having a first surface (102) and a second surface (103), with a preferably absorbent drying layer (101) arranged on the first surface (102). A tunnel-shaped gripping member (104) is arranged on the second surface (103), which tunnel-shaped gripping member (104) has a longitudinal direction and a transverse direction, with two long sides (108', 109') extending in the longitudinal direction and two short sides (110', 111') extending in the transverse direction. An opening (112, 113) extending in the transverse direction is arranged at at least one short side (110', 111') of the tunnel-shaped gripping member (104), the tunnel-shaped gripping member (104) and the opening (112, 113) having an extent in the transverse direction which permits insertion of at least one finger and at most three fingers into the tunnel-shaped gripping member (104).

## Description

### TECHNICAL FIELD

The invention relates to a wipe having a first surface and a second surface, with a hydrophilic material layer arranged on the first surface and a gripping member arranged on the second surface.

### PRIOR ART

For cleaning the genital and anal region, for example when visiting the toilet, or for washing/drying infants or incontinent bedridden adults, it has until now been customary to use toilet paper, wipes, towelettes or the like. However, the known drying means are associated with a number of disadvantages. For example, when using toilet paper or wipes for drying, an unnecessarily large amount of material is used up in order to form a "handle" to secure the drying material in relation to the hand and to ensure that the hand which is holding the drying material is protected from contamination. Moreover, toilet paper and wipes afford poor precision during the drying procedure and, especially in the nursing context, result in ineffective and unhygienic handling of the drying material.

Another problem arises in connection with wiping cloths for polishing purposes. Such cloths have to be moved at great speed across the surface which is to be polished and, as a result of the friction between the polished surface and the polishing cloth, it is easy for the polishing cloth to slip out of the user's hand. Polishing does not always require that the drying material be hydrophilic, since polishing is often carried out on dry or oily surfaces. In the latter case, it may be expedient to use a drying material which absorbs hydrophobic liquids, such as oils.

To make drying easier, to save material and to provide better protection against contamination, it has been proposed, for example in DE 4117827 and WO 96/16217, to design wipes as pockets or mitts into which the user can insert a hand. However, such mitts or pockets still require a relatively large amount of material. In addition, there is a considerable risk of the mitt or pocket slipping off the hand, or slipping round the hand during use. Thus, the known drying mitts do not afford satisfactory protection against contamination or sufficient precision, holding and control during the drying procedure.

There therefore remains a need for an improved wipe for cleaning the genital and anal area, for polishing purposes, or similar.

### DISCLOSURE OF THE INVENTION

The present invention provides a wipe of the type mentioned in the introduction and intended for example for hygiene purposes, which wipe essentially eliminates the problems of the known wipes and mitts.

A wipe designed according to the invention is principally distinguished by the fact that the gripping member is a tunnel-shaped gripping member and has a longitudinal direction and a transverse direction, with two long sides extending in the longitudinal direction and two short sides extending in the transverse direction, and that an opening extending in the transverse direction is arranged at at least one short side of the tunnel-shaped gripping member, the tunnel-shaped gripping member and the opening having an extent in the transverse direction which permits insertion of at least one finger and at most three fingers into the tunnel-shaped gripping member.

As the tunnel-shaped gripping member is relatively narrow and only accommodates at most three fingers, this ensures that the wipe can be better held securely in the hand than was the case with previously known wipes and toilet paper. As at least one finger, in addition to the thumb, is at all times situated outside the tunnel-shaped gripping member during use of the wipe, the material of the gripping member can be held securely between the finger or fingers inside the gripping member and at least one finger outside the gripping member. This means that the wipe is prevented from slipping off the hand during the drying procedure. In addition, the wipe can be maintained in a predetermined position, as a result of which soiled parts of the wipe are prevented from inadvertently coming into contact with surfaces outside the drying location. The fact that the wipe can be locked in a defined position in relation to the user's hand also means that the user has greater control over the wipe during the drying procedure, as a result of which drying is made easier and can be done with greater precision and with a better end result than has been possible with the previously known wipes. With a relatively narrow, tunnel-shaped gripping member according to the invention it is thus possible to achieve greater protection against soiling of the user's hand, better holding of the wipe, and greater precision and accuracy in the drying procedure.

It is expedient for the wipe to have a greater extent in the transverse direction than the gripping member, so that the hydrophilic layer extends beyond the tunnel-shaped gripping member, at least along the long sides of the gripping member. This provides better protection for the user's hand and improved holding of the wipe, because the risk of the tunnel-shaped gripping member turning about the finger or fingers which have been inserted into the gripping member is eliminated.

The hydrophilic material layer advantageously comprises liquid-absorbing material, for example cellulose fluff, cotton fibres, peat, or similar. To hold the layer together, the latter can also comprise various types of binders, strengthening fibres, strengthening layers, or similar. The hydrophilic material layer can also be provided with a surface layer of liquid-permeable material in order to obtain a smooth drying surface which is comfortable against the skin. Such a surface layer can also be used to hold together the fibres of the hydrophilic material layer, to increase the tensile strength, to reduce fluffing, and to make it possible to use unbonded absorption material such as cellulose fluff pulp or superabsorbent particle material.

Although different people have different sizes of fingers, it has been found that a wipe in which the tunnel-shaped gripping member has an extent in the transverse direction of at least 2.5 centimetres and at most 8 centimetres fits most users and permits insertion of one to three fingers. In a wipe with a tunnel-shaped gripping member having an extent in the transverse direction which is at least 3 centimetres and at most 6 centimetres, most users can insert one or two fingers, and, in a tunnel-shaped member having an extent in the transverse direction which is about 4 centimetres, most can insert one finger. Since the tunnel-shaped gripping member can be made of flexible material such as nonwoven, plastic film, or similar, the gripping member can be presented in a collapsed state, for example during transport and storage, in which case the gripping member assumes a tunnel shape only at the time of use, when the user inserts one or more fingers into the gripping member. The relevant width is therefore the width of the tunnel-shaped member when it is in its use state.

According to one embodiment of the invention, at least one gripping tab is arranged along at least one long side of the tunnel-shaped gripping member. Such a gripping tab is intended to be gripped between two fingers and thereby ensure reliable securing of the wipe in the user's hand. It is advantageous for a gripping tab to be arranged along each long side of the tunnel-shaped gripping member, giving a symmetrical arrangement. A wipe with a tunnel-shaped gripping member surrounded by two side tabs is used, for example, by inserting the middle finger, or the middle finger and the ring finger, into the tunnel-shaped member and by securing the gripping tabs between the finger/fingers inserted into the gripping member and the surrounding fingers. In the former case, the gripping tabs are thus secured between the middle finger and the index finger or ring finger. In the latter case, with two fingers inserted into the gripping member, the gripping tabs are secured between the middle finger and index finger on one side and between the ring finger and little finger on the other side.

To facilitate cutting of the wipes according to the invention, the outer contour of the gripping tabs can be designed to at least partially coincide with the outer contour of the hydrophilic material layer of the wipe.

In addition, the gripping tabs are expediently made from the same material layer as the tunnel-shaped gripping member.

To prevent liquid being transferred from the hydrophilic material layer to the user's hand, a liquid-tight material layer can be arranged between the tunnel-shaped gripping member and the hydrophilic material layer of the wipe.

The tunnel-shaped gripping member can be formed from two material layers which are joined together along two essentially parallel attachment lines arranged at a distance from each other corresponding to the width of one to three fingers. One of the material layers included in the tunnel-shaped gripping member can be the hydrophilic material layer of the wipe, or a further layer attached thereto, for example a liquid-tight layer, as a result of which the other material layer included in the tunnel-shaped gripping member is directly or indirectly attached to the hydrophilic material layer along two essentially parallel attachment lines arranged at a distance from each other corresponding to the width of one to three fingers.

According to an alternative embodiment, the tunnel-shaped gripping member is formed from a material layer which is folded into a tube shape and attached to the wipe along at least one attachment line. A further possibility is of course to use an element which is hose-shaped or tube-shaped from the outset and is attached to the second surface of the wipe.

To allow most of a finger to be inserted into the tunnel-shaped gripping member, it is expedient for the latter to have a longitudinal extent of at least 5 centimetres and preferably of at least 8 centimetres.

### BRIEF DESCRIPTION OF THE FIGURES

The invention will now be described in greater detail with reference to the figures shown in the attached drawings. Of these:
Figure 1 shows a plan view of a wipe according to a first embodiment of the invention, seen from the side which, during drying, is intended to be directed away from the drying area;
Figure 2 shows a section along the line II-II through the wipe in Figure 1;
Figure 3 shows a perspective view of how the wipe in Figures 1 and 2 can be securely held during use;
Figure 4 shows a plan view of a wipe according to a second embodiment of the invention, seen from the side which, during drying, is intended to be directed away from the drying area;
Figure 5 shows a section along the line V-V through the wipe in Figure 4;
Figure 6 shows a plan view of a wipe according to a third embodiment of the invention, seen from the side which, during drying, is intended to be directed away from the drying area;
Figure 7 shows a section along the line VII-VII through the wipe in Figure 6;
Figure 8 shows a plan view of a wipe according to a fourth embodiment of the invention, seen from the side which, during drying, is intended to be directed away from the drying area, and
Figure 9 shows a section along the line IX-IX through the wipe in Figure 8.

### DESCRIPTION OF EMBODIMENTS

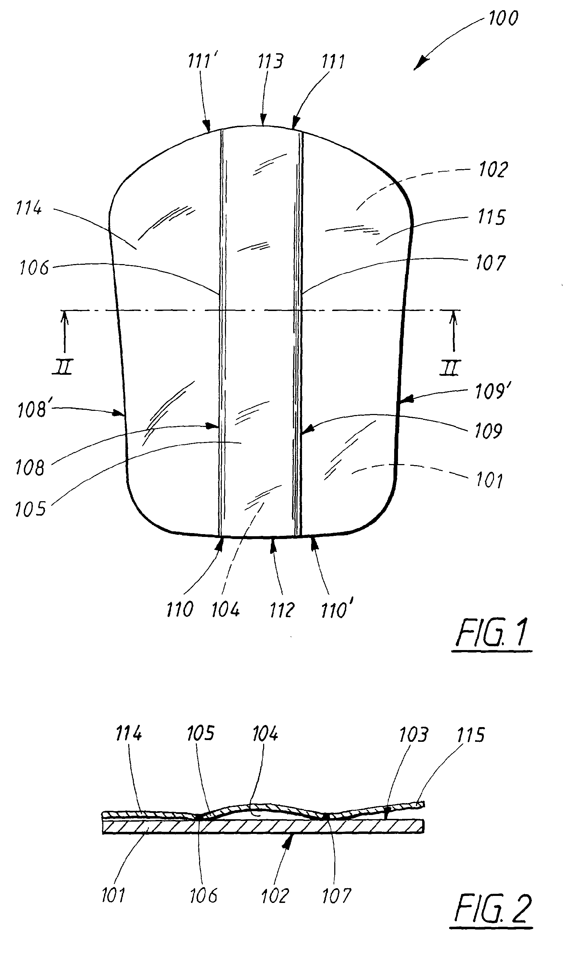

The wipe 100 shown in Figures 1 to 3 is shown from the side which is intended to be gripped during use and comprises a first layer, the drying layer 101, made of liquid-absorbing or at least hydrophilic material. Suitable materials in this case are layers of tissue, thin flexible layers of absorbent foam and textiles or textile-like material, preferably so-called nonwoven material comprising absorbent or at least hydrophilic fibres. Examples of fibres that can be used in this connection are cellulose fibres, regenerated cellulose, polyester, polyolefin fibres which have been rendered hydrophilic, or similar. Although the drying layer 101 comprises absorbent material, it does not need to consist entirely of absorbent material and can contain nonabsorbent binding fibres, strengthening fibres, or similar. For example, nonwoven material consisting of fibre mixtures with absorbent and nonabsorbent fibres can be used. However, it is preferable for the fibres included to consist essentially of fibres which are hydrophilic or which have been treated to obtain a hydrophilic surface, for example with wetting agents or by chemical or physical modification of the fibres.

The drying layer 101 has a drying surface 102 which is intended to be directed towards the surface which is to be dried, and a gripping surface 103 on which a tunnel-shaped gripping member 104 is arranged.

The tunnel-shaped gripping member 104 is formed from a second layer 105 which is attached to the drying layer along two parallel attachment lines 106, 107 by gluing, welding, or similar. The join between the drying layer 101 and the second layer 105 can be made continuous along the full extent of the attachment lines 106, 107 or can be in the form of attachment points or attachment areas arranged along the attachment lines 106, 107. The tunnel-shaped gripping member 104 has longitudinal side edges 108, 109 which extend in the longitudinal direction of the wipe 100 and are delimited, in the transverse direction of the wipe 100, by the parallel attachment lines 106, 107, which are expediently arranged at a distance of 2.5 to 8 centimetres from each other, expediently 3 to 6 centimetres, and preferably at a distance of about 4 centimetres. The distance between the attachment lines should be such that at least one finger can be easily inserted into the space delimited by the drying layer 101 and the second layer 105 and by the attachment lines 106, 107. However, the distance must not be so great as to allow more than three fingers to be inserted into the gripping member 104.

The second layer 105 can consist of the same material as the drying layer or of some other layer material suitable for the purpose. The second layer 105 can be chosen from a larger group of materials, since no requirements in terms of absorption properties are placed on this layer. Thus, the second layer 105 can be a layer of tissue, a nonwoven layer, a plastic film, or a paper layer, or similar.

The wipe 100 has a trapezoid shape with a longitudinal direction and a transverse direction and with two equal long side edges 108', 109' extending in the longitudinal direction and two end edges 110', 111' extending in the transverse direction, of which one end edge 110' is slightly shorter than the other end edge 111'. In the illustrative embodiment shown, the tunnel-shaped gripping member 104 has an opening 112, 113 at each end edge 110', 111' of the wipe 100.

The two layers 101, 105 included in the wipe have essentially the same shape and planar extent, which means that the second layer 105, in addition to the tunnel-shaped gripping member 14, forms a longitudinal grippable side tab 114, 115 between each attachment line 106, 107 and the corresponding side edge 108', 109' of the wipe 100.

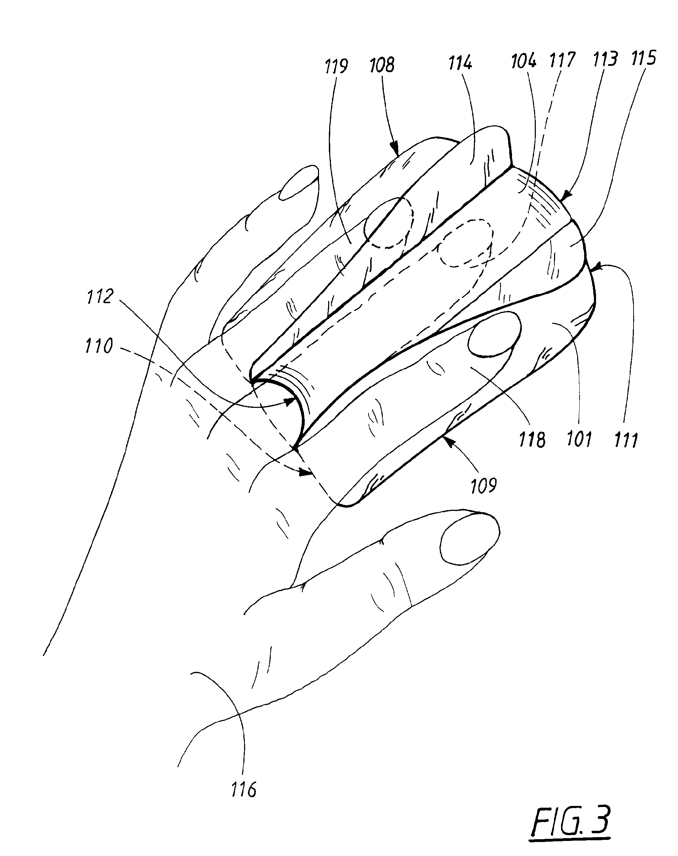

When using the wipe 100, one of the fingers of the hand 116, preferably the middle finger 117, is inserted into the tunnel-shaped gripping member 104 at the shorter end edge 110' of the wipe, as is shown in Figure 3. The index finger 118 and the ring finger 119 are inserted between the drying layer 101 and the second layer 105 on both sides of the tunnel-shaped gripping member 104, as a result of which the longitudinal side tabs, or gripping tabs 114, 115, of the second layer 105 can be held securely between the middle finger 117 and the index finger 118 or ring finger 119. The two gripping tabs 114, 115 are not essential to the invention but increase the grippability of the wipe 100.

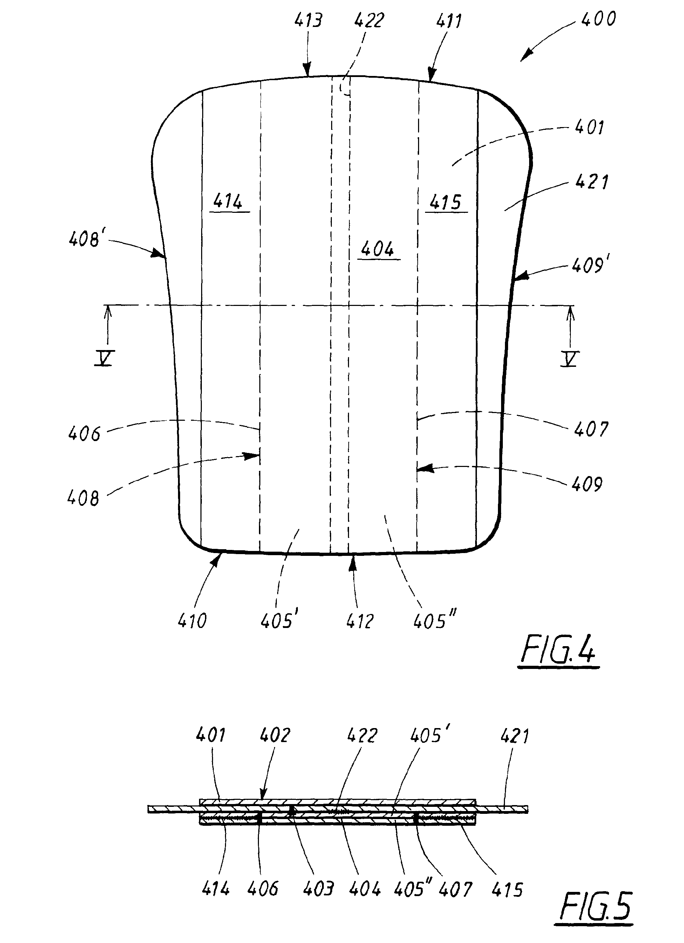

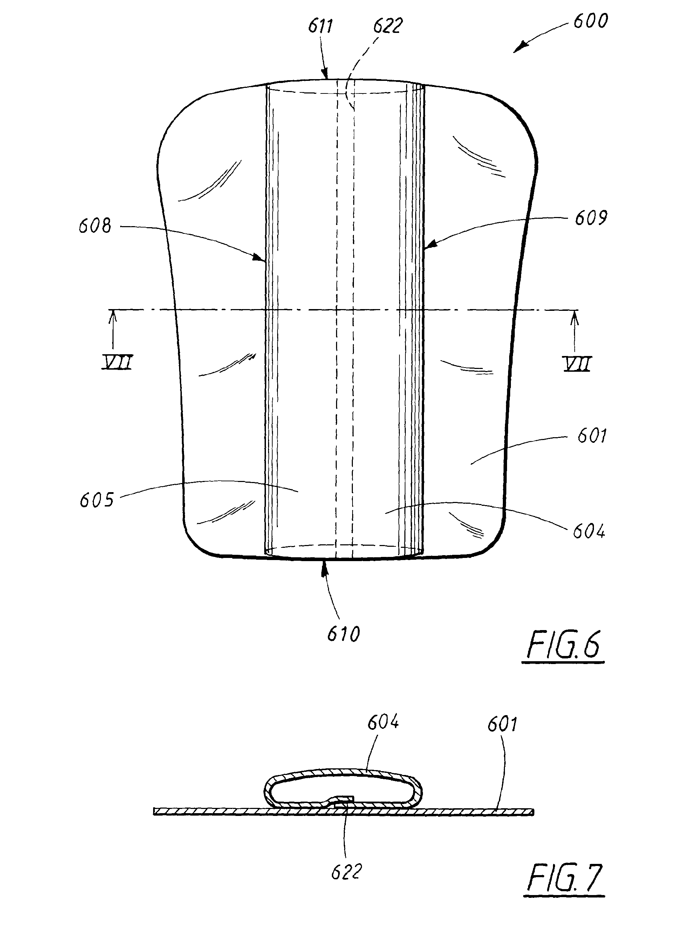

The wipe 400 shown in Figures 4 and 5 is again seen from the side which is intended to be gripped during use. The wipe 400 comprises a drying layer 401 with a drying surface 402 and a second surface 403 which is directed away from the drying surface 402. A further material layer, the protective layer 421, is arranged on the second surface of the wipe. The protective layer 421 is expediently a layer of tissue, a nonwoven layer, or a liquid-tight layer such as a plastic layer, or a hydrophobic nonwoven layer. Alternatively, the protective layer 421 can be a laminate of an absorbent or hydrophilic layer and a liquid-tight layer, for example a layer of tissue and a plastic layer.

A tunnel-shaped gripping member 404, which is formed from two material layers 405', 405" which are joined together along two parallel attachment lines 406, 407, for example by adhesive bonding, stitching, or welding, is attached to that surface of the protective layer 421 directed away from the drying layer 401. The attachment lines 406, 407 define the transverse extent of the gripping member 404 and thus form side edges 408, 409 of the gripping member 404, while the open ends at the end edges 410', 411' of the wipe form end edges 410, 411 of the gripping member 404.

The attachment of the tunnel-shaped gripping member 404 to the protective layer 421 is made along a central band-shaped attachment area 422 extending in the longitudinal direction of the wipe 400. Like the joining of the tunnel-shaped gripping member 404, this join can be made using any technique suitable for the purpose, such as adhesive bonding, stitching, or welding with heat or ultrasound. The join can be in the form of a continuous seam along the whole of the band-shaped attachment area 422, or it can be discontinuous and consist of two or more individual attachment areas.

Like the dry wipe shown in Figures 1 - 3, the wipe 400 has a trapezoid shape with a longitudinal direction and a transverse direction and with two equal long side edges 408', 409' extending in the longitudinal direction and two end edges 410', 411' extending in the transverse direction, of which one end edge 410' is slightly shorter than the other end edge 411'. The tunnel-shaped gripping member 404 has an opening 412, 413 at each end edge 410', 411'.

The drying layer 401 has an essentially rectangular shape and is the same length as the protective layer 421, but slightly narrower than this layer. The protective layer 421 defines the planar extent of the wipe 400 and thus has the same shape as the wipe 400. The protective layer 421 is intended to protect the user's hand against soiling and should therefore be sufficiently wide to be able to cover all the fingers of the hand except the thumb.

The two material layers 405', 405" which form the tunnel-shaped gripping member 404 extend in the transverse direction of the wipe beyond the attachment lines 406, 407 between the layers 405', 405" and form, in the same way as in the embodiment in Figures 1 - 3, gripping tabs 414, 415 which can be held securely between the user's fingers for more reliable gripping of the wipe 400. The material layers 405', 405" can be of any suitable layer material but are preferably made of a soft and pliable material such as tissue, nonwoven, or plastic film. The material layers 405', 405" can be of the same material or of different materials.

The wipe shown in Figures 4 and 5 is used in the same way as the wipe in Figures 1 - 3. Thus, one, two or three fingers are inserted into the tunnel-shaped gripping member 404 through an opening 412, 413, preferably the opening 412 situated at the shorter end edge 410' of the wipe 400, and one or both of the gripping tabs 414, 415 is/are held securely between a finger inserted into the gripping member 404 and at least one adjacent finger outside the gripping member 404 in order to achieve secure holding of the wipe in the hand. It is expedient, but not necessary, for the two layers 405', 405" in the gripping member 404 to be connected to each other within the gripping tabs 414, 415, since such connection between the layers 405', 405" increases the stability of the gripping tabs 414, 415 and makes these easier to grip.

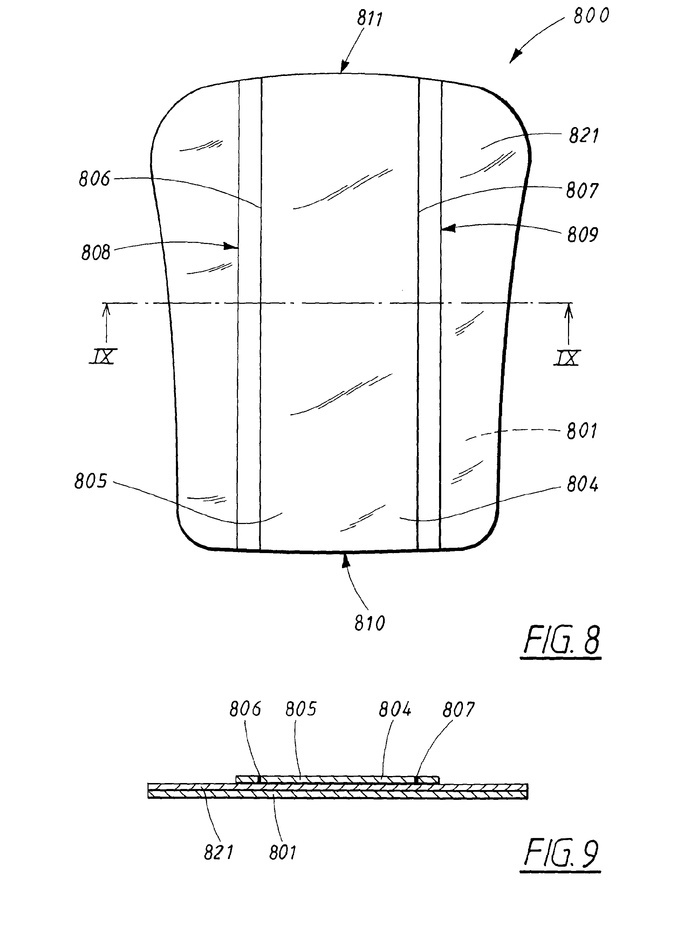

The wipe 600 shown in Figures 6 and 7 comprises a drying layer 601 and a tunnel-shaped gripping member 604 with two long sides 608, 609 and two short sides 610, 611. The tunnel-shaped gripping member 604 is formed from a rectangular material layer 605 which has been folded into a tube shape and has been attached with the join 622 between the side edges of the material layer 605 to the drying layer 601, in the same way as in the wipe shown in Figures 4 and 5. In the embodiment shown in Figures 6 and 7, the wipe 600 can of course, as in Figures 4, 5, 8 and 9, comprise further material layers for protecting the user's hand against soiling, for example a liquid-tight layer between the gripping member 604 and the drying layer 601.

Figures 8 and 9 show an alternative way of obtaining a wipe 800 with a tunnel-shaped gripping member 804 having long sides 808, 809 and short sides 810, 811 and made from a separate material layer 805 which is attached to the wipe 800 along two parallel attachment lines 806,807. The wipe 800 does not have grippable side tabs but has a liquid-tight material layer 821 arranged between the drying layer 801 and the tunnel-shaped gripping member 804.

Although the wipes in the illustrative embodiments shown have a trapezoid shape, it is of course possible, within the scope of the invention, to use a number of other shapes. For example, square, rectangular, circular, oval or triangular wipes can be used. The size of the wipe can of course be varied according to the area of use. However, the wipe should have a width which corresponds at least to two finger widths. It is also sufficient for the tunnel-shaped gripping member to be provided with a finger opening at just one end of the gripping member. The length of the gripping member should correspond to at least 75% of one finger length and preferably a whole finger length, and the gripping member need not extend the full length of the wipe.

## Claims

1. Wipe (100) having a first surface (102) and a second surface (103), with a drying layer (101) arranged on the first surface (102) and a gripping member (104) arranged on the second surface (103), **characterized in that** the gripping member is a tunnel-shaped gripping member (104), which tunnel-shaped gripping member (104) has a longitudinal direction and a transverse direction, with two long sides (108', 109') extending in the longitudinal direction and two short sides (110', 111') extending in the transverse direction, and **in that** an opening (112, 113) extending in the transverse direction is arranged at at least one short side (110', 111') of the tunnel-shaped gripping member (104), the tunnel-shaped gripping member (104) and the opening (112, 113) having an extent in the transverse direction which permits insertion of at least one finger and at most three fingers into the tunnel-shaped gripping member (104).

2. Wipe according to Claim 1, in which the wipe extends beyond the tunnel-shaped gripping member (104), at least along the long sides (108', 109') of the gripping member (104).

3. Wipe according to Claim 2, in which at least one gripping tab (114, 115) is arranged along at least one long side (108', 109') of the tunnel-shaped gripping member (104).

4. Wipe according to Claim 3, in which a gripping tab (114, 115) is arranged along each long side (108', 109') of the tunnel-shaped gripping member (104).

5. Wipe according to Claim 4, in which the outer contour of the gripping tabs (114, 115) coincides with the outer contour of the drying layer (101) of the wipe (100).

6. Wipe according to any of Claims 3 - 5, in which the gripping tabs (114, 115) are made from a material layer included in the tunnel-shaped gripping member (104).

7. Wipe according to any of the preceding claims, in which the drying layer (101) comprises liquid-absorbing material.

8. Wipe according to any of the preceding claims, in which a liquid-tight material layer (821) is arranged between the tunnel-shaped gripping member (804) and the drying layer (801) of the wipe.

9. Wipe according to any of the preceding claims, in which the tunnel-shaped gripping member (104) has a transverse extent which is at least 2.5 centimetres and at most 8 centimetres.

10. Wipe according to Claim 9, in which the tunnel-shaped gripping member (104) has a transverse extent which is at least 3 centimetres and at most 6 centimetres.

11. Wipe according to Claim 10, in which the tunnel-shaped gripping member (104) has a transverse extent of about 4 centimetres.

12. Wipe according to any of the preceding claims, in which the tunnel-shaped gripping member (104; 404; 804) is formed from two material layers (101, 105; 405', 405"; 821, 805) which are joined together along two essentially parallel attachment lines (106, 107; 406, 407; 806, 807) arranged at a distance from each other corresponding to the width of one to three fingers.

13. Wipe according to Claim 12, in which one of the material layers (101, 105; 405', 405"; 821, 805) included in the tunnel-shaped gripping member (104; 404; 804) is directly or indirectly attached to the hydrophilic material layer (101; 401; 801) along two essentially parallel attachment lines (106, 107; 406, 407; 806, 807) arranged at a distance from each other corresponding to the width of one to three fingers.

14. Wipe according to any of claims 1 - 12, in which the tunnel-shaped gripping member (604) is formed from a material layer (605) which is folded into a tube shape and attached to the wipe (600) along at least one attachment area (622).

15. Wipe according to any of the preceding claims, in which the tunnel-shaped gripping member (104) has a longitudinal extent of at least 5 centimetres and preferably of at least 8 centimetres.
